# EUROPÄISCHE PATENTSCHRIFT

(11) **EP 3 663 029 B1**
(45) Veröffentlichungstag und Bekanntmachung des Hinweises auf die Patenterteilung: **01.03.2023**
(21) Anmeldenummer: 18210312.7
(22) Anmeldetag: 05.12.2018
(51) Int. Cl.: B23K 9/167, B23K 9/28, B23K 9/29

(54) **ELEKTRODENEINHEIT FÜR INERTGASSCHWEISSEN MIT NICHT ABSCHMELZENDER ELEKTRODE**
ELECTRODE UNIT FOR INERT GAS WELDING WITH NON-CONSUMABLE ELECTRODE
UNITÉ D'ÉLECTRODE POUR SOUDAGE SOUS GAZ INERTE À L'AIDE D'UNE ÉLECTRODE NON FUSIBLE

(43) Veröffentlichungstag der Anmeldung: 10.06.2020
(73) Patentinhaber: Dinse G.m.b.H., 22419 Hamburg (DE)
(72) Erfinder: MEWES, Christopher, 24568 Kaltenkirchen (DE); JÜRGENS, Michael, 22529 Hamburg (DE)
(74) Vertreter: Raffay & Fleck

(56) Entgegenhaltungen:
- EP-A1- 1 291 112
- EP-A2- 0 151 100
- US-A- 2 514 060

## Beschreibung

Die Erfindung betrifft eine Elektrodeneinheit für das Inertgasschweißen mit einer nicht abschmelzenden Elektrode gemäß dem Oberbegriff des Anspruchs 1.

Das Inertgasschweißen mit einer in einem Schweißbrenner angeordneten nicht abschmelzenden Elektrode ist ein seit langem bekanntes und angewendetes Schweißverfahren. Hierbei wird mit der nicht abschmelzenden Elektrode, die gegenüber dem elektrisch kontaktierten, zu schweißenden Werkstück mit einer elektrischen Spannung beaufschlagt und entsprechend kontaktiert ist, ein Lichtbogen erzeugt, der zu dem Werkstück reicht und dort thermische Energie einbringt, um das Material des Werkstücks aufzuschmelzen und so die Schweißnaht zu erzeugen. Um zu verhindern, dass die Schweißnaht durch eindringenden Luftsauerstoff oder andere reaktive Gase beeinträchtigt wird, ist die nicht abschmelzende Elektrode von einem Inertgasstrom umspült, welcher Inertgasstrom die Schweißstelle umgibt und gegenüber der äußeren Atmosphäre abgeriegelt. Als nicht abschmelzende Elektroden werden heutzutage typischerweise Wolframelektroden oder Elektroden aus einer Wolframlegierung eingesetzt. Das entsprechende Verfahren heißt dann Wolfram-Inertgasschweißen (WIG) oder zu Englisch "tungsten inert gas welding" (TIG).

Auch wenn in einem solchen Verfahren die nicht abschmelzende Elektrode, insbesondere die Wolframelektrode, im Schweißprozess grundsätzlich nicht verbraucht wird, unterliegt sie doch hohen Beanspruchungen und verliert mit der Dauer ihre Form, nutzt sich ab. Für eine exakte Erzeugung des Lichtbogens hat die Metallelektrode ein zugespitztes vorderes Ende. Wenn die Elektrodenspitze durch Verschleiß stumpf wird, verschlechtert sich das Schweißergebnis, muss die Elektrode ersetzt bzw. überarbeitet werden. Bei bekannten Systemen, wie zum Beispiel einem in der US 5,892,199 gezeigten Aufbau, ist eine langgestreckte Elektrodennadel lösbar in einem Elektrodenhalter angeordnet. Die Elektrodennadel besteht typischerweise aus Wolfram oder einer Wolframlegierung. Wenn nun die Elektrodenspitze verschlissen ist, kann die Elektrodennadel aus dem Elektrodenhalter entnommen und durch eine frische Elektrode mit scharfer Spitze ersetzt werden. Hierbei kann insbesondere, und wird dies auch, die verschlissene Elektrodennadel bearbeitet, zum Beispiel schleifbearbeitet, werden, um die durch den Verschleiß stumpf gewordene Elektrodenspitze wieder in eine ausreichend spitz zulaufende Elektrodenform zu bringen, die Elektrode sozusagen zu schärfen. Eine so überarbeitete und wieder mit einer scharfen Spitze versehene Elektrodennadel wird dann wiederum in den Elektrodenhalter eingesetzt und darin festgelegt. Weitere Beispiele für Elektrodenhalter mit austauschbaren Nadeln finden sich zudem in der US 2,514,060 sowie der EP 1 291 112 A1 und der EP 0 151 100 A2. Hierbei fokussiert sich die US 2.514,060 insbesondere darauf, einen Elektrodenhalter bereitzustellen, welcher Elektroden unterschiedlicher Größe aufzunehmen vermag. Auch die EP 1 291 112 A1 beschäftigt sich mit dem Festlegen einer Elektrodennadel mittels Klemmung über konische Klemmsegmente. Ferner beschreibt die EP 0 151 100 A2 ein Konzept zur Festlegung einer Elektrodennadel mit Hilfe einer Spannhülse, welche den Elektrodenwechsel möglichst erleichtern und dadurch beschleunigen soll.

Ein Problem ergibt sich hierbei darin, dass nach einem Wechsel der Elektrodennadel die Positionen der Elektrodenspitze gegenüber der weiteren Anordnung des Schweißbrenners nicht exakt reproduziert werden kann, sodass insbesondere beim Roboterschweißen die Lage der Elektrodenspitze im Raum vor einem Fortführen des Schweißvorganges exakt wiederhergestellt werden muss, indem z.B. mittels einer Einstelllehre oder eines vergleichbaren Justierinstruments, oder dass ggf. sogar die Lage der Elektrodenspitze im Raum erneut eingelernt werden muss.

Um diesem Problem zu begegnen und beim Austausch einer verschlissenen Elektrodenspitze bzw. einer verschlissenen nicht abschmelzen Elektrode ein unmittelbares Fortführen der Schweißbearbeitung ohne erforderliches Nachjustieren der neu eingesetzten Elektrodenspitze oder gar Einlernen des Roboters zu ermöglichen, ist im Stand der Technik vorgeschlagen worden, eine Elektrodeneinheit zu bilden, die in einem Elektrodenhalter fest und unlösbar aufgenommen eine nicht abschmelzende Elektrode, typischerweise in einer Nadelform, enthält und die in einer entsprechenden Aufnahme des Schweißbrenners in definierter und reproduzierbarer Weise eingesetzt und festgelegt werden kann, zum Beispiel eingeschraubt. Beschrieben ist eine solche Lösung zum Beispiel in der DE 10 2009 008 250 B4, die eine Elektrodeneinheit mit den Merkmalen des Oberbegriffs des Anspruchs 1 zeigt. Bei dieser Lösung ist die Elektrodeneinheit ein Verbrauchs- bzw. Verschleißteil, bei dem nach einer Abnutzung der Elektrodenspitze kein erneutes Schärfen erfolgt, sondern die gesamte Elektrodeneinheit entsorgt bzw. einer Wiederverwertung im Rahmen des Recyclings (Metallrecycling) zugeführt wird. Dadurch, dass die Elektrodeneinheit, dass insbesondere der Elektrodenhalter, wie bereits erwähnt reproduzierbar in einer Aufnahme an des Schweißbrenners festgelegt werden kann, kann eine verschlissene Elektrodeneinheit, also eine Elektrodeneinheit mit abgenutzter Elektrodenspitze der nicht abschmelzenden Elektrode, aus der Aufnahme an dem Schweißbrenner entnommen, kann eine frische Elektrodeneinheit eingesetzt werden und kann, ohne weitere aufwendige Justierung der Position der Elektrodenspitze oder sogar erneutes Einlernen des Kontaktpunktes (also der Lage der Elektrodenspitze im Raum) auch beim Roboterschweißen der Schweißvorgang unmittelbar fortgesetzt werden. Es ergibt sich somit eine deutliche Reduzierung der Zeit und damit eine Erhöhung der nutzbaren Einsatzzeit des Roboterschweißgerätes bzw. der Roboterschweißanlage, sodass die Auslastung der Maschine erhöht und damit Kosten gespart werden können.

Es hat sich allerdings herausgestellt, dass bei dieser vorbekannten Elektrodeneinheit Probleme auftreten, die es zu adressieren gilt. Typischerweise sind Schweißbrenner, in denen eine wie bekannte Elektrodeneinheit verbaut wird, wassergekühlt, um die beim Schweißvorgang entstehende thermische Energie, die anfallende Wärme, abzuführen. Eine in einem geschlossenen Kreis geführte Wasserkühlung kann allerdings aufgrund der baulichen Gegebenheiten nicht bis zu einem Bereich geführt werden, in dem die Elektrodeneinheit in der Aufnahme sitzt. Entsprechend ist bei einer konstruktiven Lösung gemäß der DE 10 2009 008 250 B4 vorgesehen, dass Kühlwasser in einem zentralen Kühlrohr in einen Hohlraum hineingeleitet wird, der zwischen der eingeschraubten Elektrodeneinheit, genauer deren rückwärtiger Stirnfläche und dem Austritt des Kühlrohres gebildet ist. Diese konstruktive Lösung bringt jedoch verschiedene Nachteile mit sich. Zum einen ist das Konzept der dort gegebenen Kühlwasserführung problematisch insoweit, als dass in dem Hohlraum das aus dem Kühlrohr austretende Kühlwasser sowohl in Richtung Elektrodeneinheit strömen als auch von dieser wieder weg strömen muss, um abtransportiert zu werden. Hier ist also eine Art Sackgasse gebildet, was bekanntermaßen bei einer Führung des Kühlmittels zu Problemen führt, insbesondere die Effizienz der Kühlung am Ende der Sackgasse verringert. Des Weiteren ist hier für eine Abdichtung des Hohlraums durch die dort festgelegte, insbesondere eingeschraubte, Elektrodeneinheit Sorge zu tragen. Insoweit kann nicht nur bei einem Wechsel der Elektrodeneinheit Kühlmedium, insbesondere Wasser, austreten und damit in Bereiche der Werkstückbearbeitung gelangen, wo ein solches Medium nicht erwünscht ist. Es kann auch bei einer nicht ganz korrekt eingesetzten Elektrodeneinheit im Schweißprozess die Gefahr bestehen, dass dort Kühlmedium, also Wasser austritt. Ein Wasseraustritt während des Schweißvorganges bringt wegen der schnellen Verdampfung und der damit einhergehenden exklusiven Wirkung eine große Gefahr mit sich, auch ist bei anliegender elektrischer Energie Kühlwasser, welche selbstständig stromleitend ist, die Gefahr von elektrischen Kurzschlüssen gegeben. In einer weiteren Ausgestaltung sieht die DE 10 2009 008 250 B4 vor, dass der Hohlraum nicht bis an das rückwärtige Stirnende der Elektrodeneinheit heranragt, sondern nur bis in eine Aufnahme für die Elektrodeneinheit hinein geführt ist, dort als Sackloch endet. Zwar sind hier die vorstehend geschilderten Probleme der Abdichtung und der Gefahr eines Austritts des Kühlmediums nicht gegeben, es bleibt allerdings bei der Problematik der geringen Kühlwirkung eines in eine Sackgasse geführten Kühlmediums. Hinzu kommt hier, dass die Wirkstelle des Kühlmediums von der Elektrodeneinheit weiter entfernt liegt, sodass die Kühlwirkung geringer ausfällt.

Ein weiteres Problem besteht bei der aus der DE 10 2009 008 250 B4 bekannten Lösung darin, dass die in die Aufnahme eingesetzte, typischerweise eingeschraubte, Elektrodeneinheit mit einer umlaufenden Anschlagfläche an einem stirnseitigen Anschlag einer Elektronenaufnahme des Schweißbrenners anschlägt, wenn diese eingesetzt und fest verschraubt ist. Bei den hohen thermischen Belastungen, die der Elektrodenhalter und auch die Elektrodenaufnahme des Schweißbrenners des Schweißvorganges erfahren, kann es zu thermischen Verformungen kommen, die eine Verklemmung des Elektrodenhalters, also der Elektrodeneinheit, in der Elektrodenaufnahme des Schweißbrenners führen, sodass sich die Verbindung zwischen den Elektrodenhalter und Elektrodenaufnahme nicht mehr lösen lässt, dass also eine Elektrodeneinheit mit verschlissener Elektrode nicht mehr ausgebaut und gewechselt werden kann. In einem solchen Fall müssen dann weitere Bauteile des Schweißbrenners mit ausgewechselt werden, die üblicherweise deutlich längere Standzeiten aufweisen als die Elektrodeneinheit. Dies erhöht nicht nur die Kosten, sondern führt entgegen dem zunächst erreichten Nutzen zu einer Erhöhung der Rüst- und Ausfallzeiten des Schweißbrenners bzw. des mit diesem ausgestatteten Schweißroboters, bringt also erhebliche wirtschaftliche Nachteile mit sich.

Diesen erkannten Nachteilen abzuhelfen ist Aufgabe der Erfindung. Mit der Erfindung soll also eine wie vorstehend beschriebene, gattungsgemäße Elektrodeneinheit insoweit verbessert werden, als dass sie im Schweißbetrieb effizient gekühlt werden kann und eine verminderte Neigung zum durch thermische Ausdehnungen induzierten Verklemmen beziehungslose Verkeilen aufweist.

Erfindungsgemäß für diese Aufgabe gelöst durch eine Elektrodeneinheit mit den Merkmalen des Anspruchs 1. Vorteilhafte Weiterbildungen einer solchen Elektrodeneinheit sind in den Ansprüchen 2 bis 14 angegeben. Ein weiterer Aspekt der Lösung dieser Aufgabe besteht erfindungsgemäß in einem Schweißbrenner für das Inertgasschweißen mit einer nicht abschmelzen Elektrode gemäß Anspruch 15.

Gemäß der Erfindung weist also eine Elektrodeneinheit für das Inertgasschwei-βen mittels einer nicht abschmelzenden Elektrode einen Elektrodenhalter und eine in dem Elektrodenhalter fest und unlösbar gehaltene Elektrode auf. Die Elektrode hat an einem vorderen Ende eine Elektrodenspitze, wobei das vordere, die Elektrodenspitze aufweisende Ende der Elektrode an einem ersten Längsende des Elektrodenhalters über den Elektrodenhalter übersteht. Insoweit stimmt die erfindungsgemäße Elektrodeneinheit konstruktiv mit der vorbekannten Elektrodeneinheit gemäß zum Beispiel der DE 10 2009 008 250 B4 überein. Das Besondere an der erfindungsgemäßen Elektrodeneinheit besteht nun darin, dass in dem Elektrodenhalter ein Gasführungskanal ausgebildet ist. Dieser Gasführungskanal weist eine zu einem dem ersten Längsende des Elektrodenhalters gegenüberliegenden zweiten Längsende des Elektrodenhalters hin gelegene Eintrittsöffnung auf. Die Eintrittsöffnung wird durch den Gasführungskanal mit wenigstens einer quer zu einer Längserstreckung des Elektrodenhalters weisenden, von der Eintrittsöffnung in Richtung der Längserstreckung gesehen zu dem ersten Längsenden hin verschoben gelegenen Austrittsöffnung verbunden.

Durch diese Ausgestaltung kann durch die Elektrodeneinheit, genauer gesagt durch den Elektrodenhalter, Gas geführt werden. Hierzu ist insbesondere der in einer entsprechenden Elektrodenaufnahme des Schweißbrenners angeordnete und festgelegte Elektrodenhalter, ist also die Elektrodeneinheit, im Betrieb mit einem Gaskanal verbunden, aus dem in dem Schweißbrenner zugeführtes Gas in die Eintrittsöffnung überführt wird. Bei diesem Gas kann es sich insbesondere um ein Inertgas handeln, welches in einer wie vorstehend beschriebenen Weise beim Schweißvorgang zum Abriegeln der Schweißstelle gegenüber der umgebenden Atmosphäre und damit zum Verhindern des Vordringens oxidierenden oder in sonstiger Weise reaktiven Gases zu der Schweißstelle dient. Der Gastführungskanal in dem Elektrodenhalter übernimmt dabei einerseits die Aufgabe der Zuführung von Gas, insbesondere Inertgas, zu der Schweißstelle. Andererseits führt die Durchleitung des Gases durch den Elektrodenhalter zu einer weiteren Kühlwirkung. Während des Schweißprozesses entstehende, über die Elektrode auf den Elektrodenhalter überführte Wärme kann so zumindest in einem Teil von dem durchströmenden Gas, insbesondere Inertgas, aufgenommen und darüber aus dem Bauteil abgeführt werden. Eine weitergehende Kühlung kann insbesondere, wird dies in der Regel auch, durch eine Flüssigkeitskühlung, insbesondere Wasserkühlung, erreicht werden, mittels derer zum Beispiel der Bereich der Elektrodenaufnahme im Schweißbrenner weiter gekühlt wird, sodass in der Elektrodeneinheit auflaufende Wärme über den Elektrodenhalter an die Elektrodenaufnahme und von dort an das flüssige Kühlmittel abgegeben wird.

Der Umstand, dass die Austrittsöffnung quer zu der Lenkerstreckung des Elektrodenhalters weist, hilft bei einer Verteilung des austretenden Gasstromes in Umfangsrichtung, um somit das Gas, insbesondere Inertgas, möglichst gleichmäßig um die Elektrodenspitze der Elektrode herum, also um die Schweißstelle herum, zu verteilen und somit die Schweißstelle bestmöglich abzuschirmen.

Durch diese mit dem Gasführungskanal geschaffene weitere Kühlmöglichkeit ergibt sich eine verbesserte Kühlung des Bauteils der Elektrodeneinheit, was zu einer deutlichen Verringerung der Gefahr eines Verkeilens bzw. Verklemmens dieses Bauteils in einer Aufnahme in einem Elektrodenhalter eines Schweißbrenners führt. Zudem bewirkt diese verbesserte Kühlung eine Verlängerung der Standzeit der Elektrodeneinheit. Dadurch, dass im unmittelbaren Kontakt mit der Elektrodeneinheit, genauer mit dem Elektrodenhalter, kein flüssiges Kühlmedium verwendet wird, sondern das ohnedies im Betrieb bis zur Schweißstelle geführte Gas, insbesondere Inertgas, ergibt sich auch kein Problem etwa abzudichtender Übergangsstellen und der Gefahr von Leckagen eines flüssigen Kühlmediums, wie sie beim Stand der Technik zu beobachten ist.

Mit Vorteil kann vorgesehen sein, dass nicht lediglich eine Austrittsöffnung, sondern eine Mehrzahl solche Austrittsöffnungen vorgesehen sind, die entlang eines Umfanges des Elektrodenhalters verteilt angeordnet sind und jeweils quer zu der Längserstreckung des Elektrodenhalters weisen. Insbesondere können diese Austrittsöffnungen auf einer gleichen Längsposition des Elektrodenhalters entlang des Umfanges verteilt angeordnet sein. Die Anordnung von mehreren Austrittsöffnungen, die entlang des Umfanges verteilt vorgesehen sind, befördert die umfangsmäßige Verteilung des dort austretenden Gases und stellt somit weiter sicher, dass an der Schweißstelle ein um die Elektrodenspitze herum geschlossener Vorhang aus Gas, insbesondere Inertgas, entsteht.

Weiterhin kann gemäß der Erfindung vorgesehen sein, dass die Eingangsöffnung an einer an einem zweiten Längsende ausgebildeten Stirnseite des Elektrodenhalters angeordnet ist und dass der Gasführungskanal einen entlang der Längserstreckung verlaufenden, von der Eingangsöffnung ausgehenden, in Richtung des ersten Längsendes geführten Längskanalabschnitt und weiterhin wenigstens einen quer zu dem Längskanalabschnitt geführten, in der Austrittsöffnung mündenden Querkanalabschnitt aufweist. Dieser Querkanalabschnitt, im Falle von mehreren Austrittsöffnungen die Querkanalabschnitte, verbinden dabei die Austrittsöffnung(en) mit dem Längskanalabschnitt. Diese Bauform lässt sich insbesondere leicht fertigen, indem der Längskanalabschnitt als Sacklochbohrung in den Elektrodenhalter eingebracht wird und der Querkanalabschnitt (die Querkanalabschnitte) durch (eine) Querbohrung(en) realisiert wird/werden, die in der Längsbohrung mündet / münden. Außerdem wird durch diese Bauweise das Material des Elektrodenhalters entlang einer möglichst langen Strecke von dem durch den Gasführungskanal strömenden Gas durchströmt, sodass sich eine lange Wegstrecke für die Aufnahme von abzuführender Wärme ergibt, die Kühlwirkung verbessert ist. Insbesondere kann gemäß einer weiteren vorteilhaften Weiterbildung der Erfindung der Längskanalabschnitt entlang einer Mittellängsachse des Elektrodenhalters verlaufen. Einerseits liegt ein so geführter Längskanalabschnitt zentralsymmetrisch in dem Material des Elektrodenhalters und kann somit rundum von allen Seiten gleichermaßen gut Wärme aufnehmen. Andererseits ist eine Fertigung mit einer zentral angebrachten Sacklochbohrung in Längsrichtung des Elektrodenhalters vergleichsweise einfach zu realisieren.

Mit einer weiteren vorteilhaften Weiterbildung der Erfindung kann vorgesehen sein, dass die Elektrode mit einem hinteren, in dem Elektrodenhalter fest verankerten Ende in einer Längsposition des Elektrodenhalters endet, die in Richtung des zweiten Längsendes des Elektrodenhalters gesehen vor der Position (vor den Positionen) der Austrittsöffnung (en) liegt. Bei dieser Ausgestaltung bleibt also der Längskanalabschnitt allein im Material des Elektrodenhalters, kann allerdings mit Vorteil möglichst nah an die Elektrode herangeführt werden. Es ist aber auch möglich, den Längskanalabschnitt so weit zu führen, dass er rückwärtig an dem dort gelegenen Stirnende der insbesondere stiftartig gebildeten Elektrode heranreicht. Je weiter der Längskanalabschnitt in Richtung des vorderen Endes des Elektrodenhalters geführt ist, desto besser kann das durch den Längskanalabschnitt strömende Gas die dort anfallende Wärme aufnehmen und abführen.

In einer weiteren Ausgestaltungsvariante kann mit Vorteil vorgesehen sein, dass der Elektrodenhalter einen Schaftabschnitt und einen sich an den Schaftabschnitt in Richtung des ersten Längsendes anschließenden Wirkabschnitt aufweist, wobei in dem Bereich, in dem der Wirkabschnitt sich an den Schaftabschnitt anschließt der Wirkabschnitt einen gegenüber dem Schaftabschnitt vergrößerten Durchmesser aufweist. Der vergrößerte Durchmesser kann insbesondere sprunghaft gebildet sein und unter Ausbildung eines Absatzes, insbesondere eines solchen Absatzes mit einer Absatzfläche, die quer, insbesondere senkrecht, zu der Längserstreckung bzw. einer Längsachse des Elektrodenhalters verläuft. Mit dem Schaftabschnitt kann die Elektrodeneinheit, kann insbesondere deren Elektrodenhalter, in einer Elektrodenaufnahme des Schweißbrenners festgelegt werden.

Die Austrittsöffnung(en) können bei einer solchen Ausgestaltung mit in einen Schaftabschnitt und einen Wirkabschnitt unterteiltem Elektrodenhalter insbesondere im Schaftabschnitt ausgebildet sein, sodass durch den Gasführungskanal geführtes Gas von dem vorderen Ende des Elektrodenhalters her gesehen hinter dem Wirkabschnitt austritt. In einer wie vorstehend beschriebenen Gestaltung des Elektrodenhalters mit einer Unterteilung in Wirkabschnitt und Schaftabschnitt kann des Weiteren der Schaftabschnitt eine Verbindungstruktur zum lösbaren Festlegen der Elektrodeneinheit an einer in einem Schweißbrenner vorgesehenen Anschlussstruktur, zum Beispiel einer Anschlussstruktur in einem Elektrodenhalter des Schweißbrenners, aufweisen und kann dann in dem Wirkabschnitt ein Werkzeugangriff ausgebildet sein zum Ansetzen eines Werkzeugs für das Festlegen der Elektrodeneinheit an der Anschlussstruktur. Die Verbindungsstruktur kann beispielsweise ein Außengewinde, die Anschlussstruktur ein Innengewinde in der Elektrodenaufnahme oder einem anderen Element des Schweißbrenners sein. Der Werkzeugangriff kann zum Beispiel ein Außensechskant entsprechend eines solchen einer Schraubmutter sein. Hierbei hilft der vergrößerte Durchmesser des Wirkabschnitts, da somit zum Beispiel ein Außensechskant mit einem vergrößerten metrischen oder zölligen Werkzeugmaß gebildet werden kann, was das Aufbringen eines größeren Drehmoments mit einem entsprechenden Werkzeug erlaubt.

In dem Wirkabschnitt einer wie vorstehend beschriebenen Gestaltung des Elektrodenhalters mit Wirkabschnitt und Schaftabschnitt kann weiterhin eine umfangsseitige Außenfläche des Elektrodenhalters mit einem sich in Richtung des ersten Längsendes verjüngenden Durchmesser als Gasführungsfläche ausgebildet sein. Diese Gasführungsfläche kann dazu dienen, aus der Austrittsöffnung bzw. den Austrittsöffnungen austretendes, in Richtung des vorderen Endes des Elektrodenhalters strömendes Gas zu leiten, typischerweise im Zusammenspiel mit einer im zusammengesetzten Zustand des Schweißbrenners aufgesetzten Gasführungshülse, sodass das Gas, insbesondere Inertgas, den an der Schweißstelle auszubildenden Schutzgasvorhang formt und die Schweißstelle sicher gegen ein Eindringen von oxidierendem oder in sonstiger Weise reaktivem Gas schützt, das ansonsten das Schweißergebnis negativ beeinträchtigen könnte.

Eine weitere vorteilhafte Weiterbildung der erfindungsgemäßen Elektrodeneinheit sieht vor, dass der Elektrodenhalter an seinem zweiten Längsenden einen konisch sich zu den zweiten Längsenden hin verjüngenden Sitzkonus aufweisen kann. Mit einem solchen Sitzkonus kann der Elektrodenhalter und kann damit die Elektrodeneinheit beim Einsetzen in den Schweißbrenner, in die Elektrodenaufnahme des Schweißbrenners, in einen entsprechenden Aufnahmekonus, also eine konusförmige Aufnahmeöffnung, eingreifen und darin passgenau eingebracht werden. Eine solche konische Ausgestaltung des Sitzes hat insbesondere den Vorteil, dass ein Längsanschlag gebildet wird, der nicht durch weitgehend senkrecht zu der Längsstreckung geführte, aufeinanderstoßende Flächen gebildet ist, sondern Flächen, die zwar quer zur Längserstreckung verlaufen, aber unter einem deutlich flacheren (bzw. in andere Richtung gesehen spitzeren) Winkel entsprechend dem Konuswinkel. Anders als bei weitgehend senkrecht zu der Längsstreckung geführten Stoß- beziehungsweise Anschlagflächen neigen derartige konische Sitzflächen bei durch thermische Verformung aufgebrachten Spannungen nicht dazu, Verbindungstrukturen, zum Beispiel ineinander verschraubte Gewinde, derart mit einer Kraft zu beaufschlagen, dass diese verkeilen. Vielmehr lässt sich ein durch einen Konus gebildeter Sitz auch bei thermischen Verspannungen einfacher lösen, da durch die schräg verlaufenden Konusflächen nicht nur eine die Gewinde möglicherweise verkeilende Druck- oder Zugkraft aufgebracht wird, sondern zugleich eine in Richtung einer Lösung der Schraubverbindung weisende Kraft, die entsprechende Verkeilungen und Verspannungen aufhebt, bzw. ein Lösen unterstützt bzw. erleichtert. Des Weiteren lässt sich mit einem solchen Sitzkonus in einer entsprechenden Aufnahmefläche, also einer konisch geformten Aufnahme, eine einfache Abdichtung eines Gasanschlusses erreichen. Entsprechend kann vorgesehen sein, dass die Eintrittsöffnung im Bereich des Sitzkonus angeordnet ist. Dabei ist dann die Austrittsöffnung (sind die Austrittsöffnungen) außerhalb des Sitzkonus angeordnet. Der Gasführungskanal durchdringt also den Bereich des Elektrodenhalters, der den Sitzkonus aufweist und führt weiter in einen davon abgelegenen, zum vorderen Ende hin reichenden Teil, bis er in die quer zur Längsansteckung mündenden Austrittsöffnung(en) mündet. Die Ausbildung des Elektrodenhalters mit einem Sitzkonus zum Festlegen in einem Aufnahmekonus in der Elektrodenaufnahme eines Schweißbrenners kann auch ohne eine Ausgestaltung der Elektrodenaufnahme mit einem wie vorstehend beschriebenen Gasführungskanal umgesetzt werden. Auch dann werden, wenn eben kein Anschlag mit weitgehend senkrecht zu der Längsstreckung des Elektrodenhalters geführten Stoß- beziehungsweise Anschlagflächen gebildet wird, die Längsposition des Elektrodenhalters in der Elektrodenaufnahme allein durch den Anschlag zwischen Sitzkonus und Aufnahmekonus bestimmt wird, die obigen Vorteile des Verhinderns eines Verkeilens oder Verklemmens erreicht. Insoweit kann diese Gestaltungsvariante auch als eigenständige Erfindung aufgefasst werden und wird von der Anmelderin auch so gesehen. Anstelle einer Paarung aus Sitzkonus und Aufnahmekonus kann dabei auch eine Paarung aus einer (teil-)sphärischen Sitzfläche, z.B. kugelringabschnittförmig, und einer (teil-)sphärischen Aufnahme dieselbe Wirkung erzielen.

Die Elektrode ist, wie dies bereits vorstehend erwähnt, in erfindungswesentlicher Weise in dem Elektrodenhalter fest und unlösbar festgelegt. Gemäß einer vorteilhaften Ausgestaltung der Erfindung kann dies durch eine stoffschlüssige Festlegung und/oder durch ein Verpressen erfolgen. Beide genannten Arten der Festlegung der Elektrode lassen sich einfach realisieren, wobei insbesondere ein Verpressen herstellungstechnisch einfach zu erzielen ist, einen festen und unlösbaren Sitz der Elektrode in dem Elektrodenhalter dennoch zuverlässig gewährleistet. In der Herstellung der erfindungsgemäßen Elektrodeneinheit, in der sicherzustellen ist, dass diese in gleicher Bemaßung erfolgt, um später einem Austausch einer Elektrodeneinheit mit verschlissener Elektrode gegen eine neue Elektrodeneinheit mit spitz geformter Elektrodenspitze an der Elektrode eine exakt reproduzierte Lage der Elektrodenspitze in Bezug auf den Schweißbrenner zu erhalten, kann zum Beispiel in den Elektrodenhalter eine exakt bemaßte Sacklochbohrungen von dem vorderen Ende her eingebracht werden, in der eine exakt bemaßte Elektrode eingesetzt wird. Diese kann dann zum Beispiel durch einen Rollprozess mit dem Material des Elektrodenhalters fest verbunden, also verpresst werden. Es ist aber ebenso gut möglich, die Elektrode in eine nicht auf ein hoch präzises Maß gefertigte Sacklochbohrung in dem Elektrodenhalter einzusetzen und festzulegen, z.B. durch einen wie vorstehend erwähnten Rollprozess, und die Elektrodenspitze hinsichtlich ihrer Lage relativ zu dem Elektrodenhalter anschließen maßgerecht auszubilden oder nachzuschärfen.

Damit der Elektrodenhalter die an der Schweißstelle entstehende und auf die Elektrode übertragene Wärme gut aufnehmen und dann weiter abführen kann, zum Beispiel an das durch den Gasführungskanal strömende Gas, oder aber auch an die Umgebung der Teile, die mit einer Flüssigkeitskühlung in Berührung stehen, kann der Elektrodenhalter mit Vorteil aus einem Metall mit hoher thermischer Leitfähigkeit bestehen. Dieses Metall kann zum Beispiel Kupfer sein.

Die Elektrode kann insbesondere aus Wolfram oder einer Wolframlegierung bestehen, sodass die erfindungsgemäße Elektrodeneinheit für das Wolfram-Inertgasschweißen (WIG) eingesetzt werden kann.

Wie bereits vorstehend erwähnt, besteht ein weiterer Aspekt der Erfindung in einem Schweißbrenner für das Inertgasschweißen mittels einer nicht abschmelzen Elektrode, der sich dadurch auszeichnen, dass er eine Elektrodeneinheit mit wie vorstehend beschriebenen Eigenschaften aufweist. Diese Elektrodeneinheit kann insbesondere lösbar in einer Elektrodenaufnahme angeordnet sein, wobei die Elektrodenaufnahme insbesondere eine konische Aufnahmeöffnung zur Aufnahme des Sitzkonus des Elektrodenhalters enthalten kann, sofern der Elektrodenhalter einen solchen Sitzkonus aufweist. Insbesondere kann mit Vorteil vorgesehen sein, dass die Aufnahme in dem Schweißbrenner so gestaltet ist, dass die eingesetzte Elektrodeneinheit, sofern diese in ihrem Elektrodenhalter in einen Schaftabschnitt und einen Wirkabschnitt unterteilt ist, mit dem Absatz des Wirkabschnitts nicht an einem Anschlag oder Absatz der Aufnahme bzw. des Elektrodenhalters anschlägt, wenn der Elektrodenhalter und damit die Elektrodeneinheit in der Aufnahme eingesetzt und fixiert ist. So wird verhindert, dass weitgehend senkrecht zur Längserstreckung des Elektrodenhalters liegende Anschlagflächen gebildet sind, die im zusammengefügten Zustand, d. h. bei in die Aufnahme eingesetztem Elektrodenhalter, aneinander anliegen und dann bei Einwirken thermischer Energie und hervorgerufener thermischer Verformung in einer wie oben beschriebenen Weise zum Verkeilen oder Verklemmen der ineinandergreifenden Verbindungstrukturen des Elektrodenhalters und der Aufnahme neigen bzw. führen können. Ein erfindungsgemäßer Schweißbrenner kann des Weiteren insbesondere eine Flüssigkeitskühlung, zum Beispiel eine Wasserkühlung, aufweisen die ein die Aufnahme für den Elektrodenhalter aufweisendes Bauteil zusätzlich kühlt, sodass der Elektrodenhalter weiterhin auch Wärme an dieses Bauteil abgeben kann, die dann über die Kühlflüssigkeit abgeführt wird.

Weitere Vorteile und Merkmale der Erfindung ergeben sich aus der nachstehenden Beschreibung von Ausführungsbeispielen anhand der beigefügten Figuren. Dabei zeigen:
- Fig. 1: eine teilweise weggeschnittene Ansicht einer möglichen Ausführungsform einer erfindungsgemäßen Elektrodeneinheit;
- Fig. 2: eine Längsschnittdarstellung eines Abschnitts eines mit einer wie in Fig. 1 gezeigten erfindungsgemäßen Elektrodeneinheit ausgestatteten erfindungsgemäßen Schweißbrenners; und
- Fig. 3: eine entlang einer verglichen mit der Schnittebene der Darstellung in Fig. 2 höher gelegenen Schnittebene genommene Längsschnittdarstellung eines Ausschnitts des mit der erfindungsgemäße Elektrodeneinheit gemäß Fig. 1 versehenen, wie in Fig. 2 dargestellten erfindungsgemäβen Schweißbrenners.

Die Figuren sind nicht zwingend maßstabsgerecht und zeigen auch nicht sämtliche konstruktiven Details der aufgezeigten erfindungsgemäßen Gegenstände. Sie sind vielmehr als technische Skizzen zur Erläuterung der erfindungswesentlichen Merkmale einer erfindungsgemäßen Ausgestaltungsvariante einer Elektrodeneinheit sowie einer erfindungsgemäßen Ausgestaltungsform eines diese Elektrodeneinheit einschließenden erfindungsgemäßen Schweißbrenners zu verstehen, wobei die wesentlichen Merkmale in den Figuren gezeigt und zu erkennen sind.

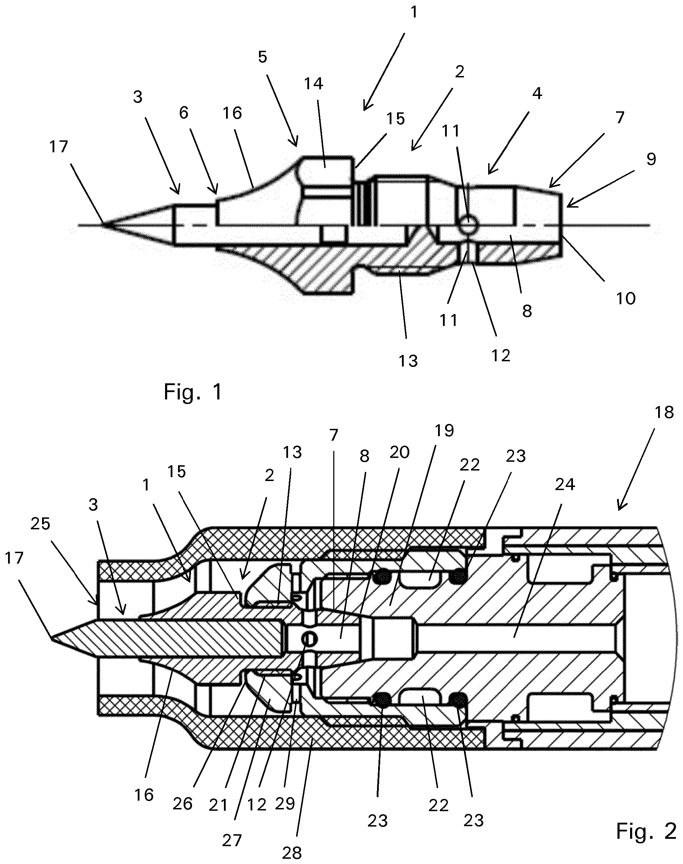

In Figur 1 ist zunächst eine mögliche Ausgestaltungsform einer erfindungsgemäßen Elektrodeneinheit 1 gezeigt, wobei die Darstellung eine teilweise weggeschnittene Wiedergabe ist. Die erfindungsgemäße Elektrodeneinheit 1 setzt sich zunächst zusammen aus zwei wesentlichen Komponenten, nämlich einem Elektrodenhalter 2 und einer in dem Elektrodenhalter 2 aufgenommenen und darin unlösbar festgelegten Elektrode 3. Der Elektrodenhalter 2 ist in dem gezeigten Ausführungsbeispiel aus einem Stück gebildet und besteht aus einem thermisch leitfähigen Metall, insbesondere aus Kupfer. Die Elektrode 3 ist eine im Schweißprozess nicht abschmelzende Elektrode und besteht vorzugsweise aus Wolfram, bzw. einer Wolframlegierung. Sie wird mit Vorteil beim WIG-Schweißen eingesetzt. Die Elektrode 3 ist stab- bzw. stiftförmigen gebildet und weist an einer Vorderseite eine Elektrodenspitze 17 auf, mit der sie über ein vorderes Ende 6 des Elektrodenhalters 2 übersteht. Die Elektrode 3 ist in dem Elektrodenhalter 2 insbesondere durch Verpressen fest und unlösbar festgelegt. Hierzu kann zum Beispiel eine axiale Bohrung in den Elektrodenhalter 2 eingebracht sein, in die die Elektrode 3 mit einem rückwärtigen Ende voran eingesetzt ist und in der die Elektrode dann durch Verpressen oder Verrollen festgelegt ist.

Der Elektrodenhalter 2 ist in zwei verschiedene Abschnitte unterteilt, einen Schaftabschnitt 4 und einen Wirkabschnitt 5. Der Schaftabschnitt 4 weist an einem dem vorderen Ende 6 axial gegenüber gelegenen hinteren Ende 9 einen Sitzkonus 7 auf. Dort ist die Außenkontur des Elektrodenhalters 2 zu einer rückwärtigen Stirnfläche hin unter einem Konuswinkel konisch verjüngt verlaufend ausgebildet. In Richtung des vorderen Endes 6 schließt sich an den Sitzkonus 7 ein zylindrischer Abschnitt an, anschließend ist in einem gegenüber dem zylindrischen Abschnitt durchmessererweiterten Abschnitt des Schaftabschnitt 4 ein Außengewinde 13 ausgebildet. Mit diesem Außengewinde 13 kann der Elektrodenhalter 2, kann somit die Elektrodeneinheit 1 insgesamt, in einer nachfolgend noch näher zu beschreibenden Weise in einer Aufnahme eines Schweißbrenners positionsgetreu festgelegt werden.

Vom hinteren Ende 9 her ist entlang einer Längssymmetrieachse eine Längsbohrung als Sacklochbohrungen in das Material des Elektrodenhalters 2 geführt, welche Längsbohrung einen Längskanalabschnitt 8 bildet. Am hinteren Ende 9 ist eine Eintrittsöffnung 10 gebildet. Im Bereich des zylinderförmigen Abschnitts, also ausgehend von dem hinteren Ende 9 in Richtung des vorderen Endes 6 des Elektrodenhalters 2 gesehen vor dem Außengewinde 13 sind über den Umfang verteilt ausgehend von der radialen Außenfläche Querbohrungen geführt, die in die Längsbohrung, also den Längskanalabschnitt 8 münden. Diese Querbohrungen bilden Querkanalabschnitte 11, die umfangseitig in Austrittsöffnungen 12 münden. Im gezeigten Ausführungsbeispiel sind in radial gleichmäßiger Verteilung, also jeweils um 90° zueinander versetzt, insgesamt vier solche Querkanalabschnitte 11 gebildet. Der Längskanalabschnitt 8 und die mit diesem verbundenen Querkanalabschnitt den 11 bilden insgesamt einen Gasführungskanal, der im Betrieb eines mit der Elektrodeneinheit 1 ausgestatteten Schweißbrenners von der Eintrittsöffnung 10 bis zu den Austrittsöffnungen 12 von einem Gas, insbesondere einem Inertgas, durchströmt wird.

Der Wirkabschnitt 5 weist in einem zu dem hinteren Ende 9 des Elektrodenhalters 2 gelegenen Bereich einen Werkzeugangriff 14 auf, hier einen Außensechskant entsprechend dem einer Schraubmutter. Im Übergang zwischen dem Schaftabschnitt 4 und dem Wirkabschnitt 5, genauer dem Werkzeugangriff 14 des Wirkabschnitts 5, ist ein Absatz 15 ausgebildet, der quer, hier insbesondere senkrecht, zu der Längsachse der Elektrodeneinheit 1, ebenso auch zur Längsachse des Elektrodenhalters 2, orientiert ist. Ausgehend von dem Werkzeugangriff 14 weiter verlaufend zum vorderen Ende 6 weist der Wirkabschnitt 14 eine sich im Durchmesser verjüngend und kurvenförmig gebildete Gasführungsfläche 16 auf, die im Betrieb eines mit der Elektrodeneinheit 1 ausgestatteten Schweißbrenners im Zusammenwirken mit einer Gasführungshülse der weiteren Führung eines durch den aus Längskanalabschnitt 8 und Querkanalabschnitten 11 gebildeten Gasführungskanal geführten Gasstroms dient.

In Figur 2 ist eine wie in Figur 1 gezeigte Elektrodeneinheit 1 in einer Position gezeigt, wie sie in einem Schweißbrenner 18 montiert ist. In dem Schweißbrenner 18 ist hierzu eine Elektrodenaufnahme 19 vorgesehen, die insbesondere ebenfalls aus einem Metall, vorzugsweise aus einem thermisch gut leitenden Metall, wie zum Beispiel Kupfer, gebildet ist. In der Elektrodenaufnahme 19 ist eine Konusaufnahme 20 geformt, die einen dem Konuswinkel des Sitzkonus 7 entsprechenden Konuswinkel aufweist und so der Aufnahme des Sitzkonus 7 dient. Weiterhin zu erkennen ist ein in einem Gasverteiler 27 ausgebildetes Innengewinde 21, welches mit dem am Schaftabschnitt 4 des Elektrodenhalters 2 der Elektrodeneinheit 1 ausgebildeten Außengewinde 13 zusammenwirkt, sodass die Elektrodeneinheit 1 mit dem Außengewinde 13 in dem Innengewinde 21 eingeschraubt und so festgelegt werden kann. Das Besondere ist hierbei, dass die in das Innengewinde des Gasverteilers 27 eingeschraubte Elektrodeneinheit 1 einen festen Anschlag allein durch das Zusammenwirken des Sitzkonus 7 mit der Konusaufnahme 20 erfährt, dass insbesondere weder eine Stirnfläche am rückseitigen Ende 9 des Elektrodenhalters 2 noch der Absatz 15 am Übergang zwischen Schaftabschnitt 4 und Wirkabschnitt 5 des Elektrodenhalters 2 an entsprechenden Gegenstücken der Elektrodenaufnahme 19 bzw. des Gasverteilers 27, dort insbesondere der Stirnfläche 26, anschlagen. Im montierten Zustand der Elektrodeneinheit 1 sind dort vielmehr jeweils Spalte belassen.

Diese Besonderheit bewirkt, dass auch bei hoher thermischer Belastung der Elektrodeneinheit 1 und der weiteren Elemente, wie Gasverteiler 27 und Elektrodenaufnahme 19 möglicherweise entstehende thermische Verformungen nicht dazu führen, dass hier Klemmkräfte ausgeübt werden, die zu einem Verkeilen oder Verklemmen führen und bedingen, dass sich die Elektrodeneinheit 1 nicht mehr aus der Elektrodenaufnahme 19 bzw. aus dem Innengewinde 21 im Gasverteiler 27 lösen lässt. Der konisch gebildete Anschlag zwischen Sitzkonus 7 und Konusaufnahme 20 bringt auch bei hoher thermischer Belastung keine solchen die Verbindung der Schraubgewinde 13 und 21 verkeilende Klemmkräfte auf.

Zu erkennen ist in Figur 2 weiterhin auch ein Gaskanal 24, der zentral und entlang einer Längsachse durch die Elektrodenaufnahme 19 geführt ist und der bei in die Elektrodenaufnahme 19 eingesetzter und in den Gasverteiler 27 eingeschraubter Elektrodeneinheit 1 eine Verbindung zur Eintrittsöffnung 10 des Längskanalabschnitts 8 und damit des Gasführungskanals in dem Elektrodenhalter 2 bildet. Durch das Zusammenwirken zwischen Sitzkonus 7 und Konusaufnahme 20 ist eine ausreichende Gasdichtigkeit geschaffen, die ein Vorbeiströmen von über den Gaskanal 24 zugeführtem Gas an dem Sitzkonus 7 verhindert, dafür sorgt, dass das über den Gaskanal 24 zugeführte Gas insgesamt durch die Eintrittsöffnung 10 in den Längskanalabschnitt 8 und damit in den Gasführungskanal des Elektrodenhalters 2 übertritt.

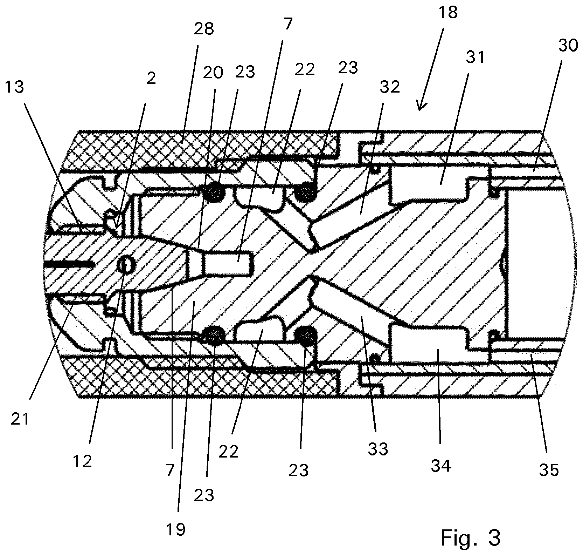

In der Figur 2 zu erkennen sind auch weitere Strukturen, die einer Kühlung der Elektrodenaufnahme 19 dienen. Dies sind ein Ringkanal 22, der mit O-Ringen 23 abgedichtet ist und in den eine Kühlflüssigkeit geführt wird. Diese Führung der Kühlflüssigkeit ist in der Figur 3 noch einmal genauer dargestellt und zu erkennen und wird entsprechend nachstehend anhand der Beschreibung dieser Figur 3 erläutert werden.

In Figur 2 ist weiter noch zu erkennen, dass eine Gasführungshülse 28 aufgeschraubt ist, die den Gasverteiler 27 und die Elektrodeneinheit 1 umgibt. An einem vorderen Ende ist eine Öffnung 25 zwischen der Gasführunghülse 28 und der Elektrode 3 der Elektrodeneinheit 1 gebildet, die die Elektrode 3 ringförmig umgibt. Über diese Öffnung 25 steht die Elektrode 3 mit ihrer Elektrodenspitze 17 vor. Im Betrieb des Schweißbrenners 18 wird nun, wie bereits erwähnt, über den Gaskanal 24 Gas, insbesondere Inertgas, in Richtung der Elektrodeneinheit 1 geleitet. Dieses Gas wird in an sich bekannter Weise dem Schweißbrenner 18 über eine Medienzuleitung, zum Beispiel als Bestandteil eines Schlauchpakets, zugeführt. Das so über den Gaskanal 24 zugeleitete Gas tritt rückwärtig durch die Eintrittsöffnung 10 in den Längskanalabschnitt 8 des Gasführungskanals in dem Elektrodenhalter 2 ein und strömt weiter voran in Richtung des rückwärtigen Endes der Elektrode 3. Durch die Querkanalabschnitte 11 strömt das Gas dann weiter in Richtung der Austrittsöffnungen 12 und tritt dort in den Gasverteiler 27 ein. Dadurch, dass insgesamt vier Querkanäle 11 in einer gleichmäßigen Winkelverteilung angeordnet sind, wird das durch die Austrittsöffnungen 12 ausströmende Gas bereits radial vergleichmäßigend verteilt. Eine weitere Verteilung des Gases erfolgt dann in dem Gasverteiler 27. Diesen verlässt das austretende Gas in einer an sich bekannten Weise durch radiale Ausströmöffnungen 29 und strömt von dort weiter in Richtung der Öffnung 25. Dabei wird das Gas von der Gasführungshülse 28, genauer deren Innenfläche, einerseits und andererseits in Richtung des vorderen Endes 6 des Elektrodenhalters 2 durch die in dem Wirkabschnitt 5 ausgebildete Gasführungsfläche 16 geführt. Aus der Öffnung 25 tritt das Gas dann ringförmig gleichmäßig verteilt aus und bildet so einen Schutzvorhang, der die Elektrodenspitze 17 der Elektrode 3 vollständig umgibt. Das Besondere an der beschriebenen Gasführung besteht nun auch darin, dass das zugeführte Gas, insbesondere das Inertgas, wie zum Beispiel Argon oder Helium, welches den Elektrodenhalter 2 in seinem Inneren entlang des Gasführungskanals durchströmt und dabei bis in den Bereich des hinteren Endes der Elektrode 3 vordringt, bei diesem Weg durch den Elektrodenhalter 2 bereits dort durch den Schweißprozess auftretende Wärme aufnehmen und abführen kann. Auf diese Weise wird das Gas, insbesondere Inertgas, auch, und dies mit hoher Effizienz, zur Kühlung des Elektrodenhalters 2 und damit der Elektrodeneinheit 1 genutzt. Da mit dem Gasstrom des zugeführten Gases typischerweise nicht die gesamte in dem Schweißprozess entstehende und auf die Elektrodeneinheit 1 überführte Wärme abgeführt werden kann, ist zusätzlich eine Flüssigkeitskühlung vorgesehen, die die Elektrodenaufnahme 19 in einem Bereich, der möglichst nah an die Elektrodeneinheit 1, bzw. an die Konusaufnahme 20 herangeführt ist, kühlt. Hierzu wird eine Kühlflüssigkeit herangeführt und durch den Ringkanal 22 geleitet. Dies geschieht, wie in Figur 3 näher dargestellt ist, indem in dem Schweißbrenner 18 über einen ersten Kühlflüssigkeitskanal 30 Kühlflüssigkeit, zum Beispiel Kühlwasser, zugeführt wird, welche Kühlflüssigkeit dann ausgehend von einem Zwischenverteiler 31 und eine in der Elektrodenaufnahme 19 durch zwei schräg geführte, aufeinander treffende Bohrungen ausgebildeten Fluidkanal in den Ringkanal 22 gespeist wird, diese Kühlflüssigkeit aus dem Ringkanal über einen weiteren Fluidkanal 33 wieder abströmt über einen Zwischensammler 34 und einen weiteren Kühlflüssigkeitskanal 35 zu einem Kühlflüssigkeitsablauf.

Aus der vorstehenden Beschreibung von nicht beschränkenden, lediglich beispielhaften Ausführungsformen ist noch einmal deutlich geworden, welchen Vorteil die erfindungsgemäße Ausgestaltung einer Elektrodeneinheit 1 mit sich bringt und auch die erfindungsgemäße Gestaltung eines Schweißbrenners 18. Die wesentlichen Vorteile liegen einerseits in der Konstruktionsgestaltung der Elektrodeneinheit 1 im Zusammenwirken mit der Konstruktion der diese aufnehmenden Teile in dem Schweißbrenner 18, also der Elektrodenaufnahme 19 und des mit dem Innengewinde 21 versehenen Gasverteilers 27, hierbei insbesondere das Zusammenwirken des Sitzkonus 7 an der Elektrodeneinheit 1 mit der Konusaufnahme 20, sowie das Verhindern von im Wesentlichen senkrecht zu der Längsrichtung der Elektrodeneinheit 1 verlaufenden, gegeneinander anschlagenden Anschlagflächen, wodurch ein Verklemmen oder Verkeilen der Elektrodeneinheit 1 in den diese aufnehmenden Elementen des Schweißbrenners 18 verhindert wird. Dadurch ist, wenn die Elektrodenspitze 17 der Elektrodeneinheit 1 verschlissen ist, ein Lösen der verschlissenen Elektrodeneinheit 1 aus dem Schweißbrenner 18 ohne weiteres möglich und kann diese schnell und ohne wesentlichen Aufwand durch eine frisch Elektrodeneinheit 1 mit spitz geformter Elektrodenspitze 17 ersetzt werden. Das Zusammenwirken der Konusaufnahme 20 mit dem Sitzkonus 7 bildet zugleich aufgrund einer entsprechend einzuhaltenden Fertigungsgenauigkeit einen räumlich derart definierten Anschlag, dass für jede eingesetzte, baugleiche Elektrodeneinheit 1 die Lage der Elektrodenspitze 17 der Elektrode 3 relativ zu den weiteren Bestandteilen des Schweißbrenners 18, zum Beispiel zu dem Gasverteiler 27 oder auch zu der Öffnung 25 der Gasführungshülse 28, identisch ist und damit nach einem Wechsel der Elektrodeneinheit 1 ein aufwendiges weiteres Justieren der Lage der Elektrodenspitze oder sogar ein erneutes Einlernen eines den Schweißbrenner 18 bedienenden Schweißroboters nicht erforderlich ist. Weiterhin ist ein wesentlicher erfindungsgemäßer Vorteil die Führung des zugeführten Gases, insbesondere Inertgases, durch den im Innern des Elektrodenhalters 2 ausgebildeten Gasführungskanal (gebildet aus Längskanalabschnitt 8 und den Querkanalabschnitten 11), durch die mit dem zugeführten und durch den Gasführungskanal geleiteten Gas eine erhebliche Kühlwirkung erhalten werden kann, also bereits ein wesentlicher Anteil der durch den Schweißprozess in die Elektrode 3 und damit auch den Elektrodenhalter 2 überführte Wärme abgeführt werden kann. Die in der Konstruktion gemäß dem Ausführungsbeispiel effektiv nah an die Konusaufnahme 20 und damit an das hintere Ende 9 der eingesetzten Elektrodeneinheit 1 herangeführte Flüssigkeitskühlung, die durch den Ringkanal 22 strömt, bewirkt eine weitere, effiziente Kühlung, sodass die Temperatur, die die Elektrodeneinheit 1 während des Schweißprozesses erfährt, auf einen vertretbaren Wert begrenzt werden kann durch effiziente Kühlung.

Der nachfolgenden Ansprüchen wird die Erfindung in ihrer allgemeinen Form bestimmt und charakterisiert.

### Bezugszeichenliste

- 1: Elektrodeneinheit
- 2: Elektrodenhalter
- 3: Elektrode
- 4: Schaftabschnitt
- 5: Wirkabschnitt
- 6: vorderes Ende
- 7: Sitzkonus
- 8: Längskanalabschnitt
- 9: hinteres Ende
- 10: Eintrittsöffnung
- 11: Querkanalabschnitt
- 12: Austrittsöffnung
- 13: Außengewinde
- 14: Werkzeugangriff
- 15: Absatz
- 16: Gasführungsfläche
- 17: Elektrodenspitze
- 18: Schweißbrenner
- 19: Elektrodenaufnahme
- 20: Konusaufnahme
- 21: Innengewinde
- 22: Ringkanal
- 23: O-Ring
- 24: Gaskanal
- 25: Öffnung
- 26: Stirnfläche
- 27: Gasverteiler
- 28: Gasführungshülse
- 29: Ausströmöffnung
- 30: Kühlflüssigkeitskanal
- 31: Zwischenverteiler
- 32: Fluidkanal
- 33: Fluidkanal
- 34: Zwischensammler
- 35: Kühlflüssigkeitskanal

## Patentansprüche

1. Elektrodeneinheit (1) für das Inertgasschweißen mittels einer nicht abschmelzenden Elektrode (3) mit einem Elektrodenhalter (2) und einer in dem Elektrodenhalter (2) fest und unlösbar gehaltenen, an einem vorderen Ende eine Elektrodenspitze (17) aufweisenden, mit dem vorderen, die Elektrodenspitze (17) aufweisenden Ende an einem ersten Längsende (6) des Elektrodenhalters (2) über den Elektrodenhalter (2) überstehenden Elektrode (3), **dadurch gekennzeichnet, dass** in dem Elektrodenhalter (2) ein Gasführungskanal (8, 11) ausgebildet ist mit einer zu einem dem ersten Längsende (6) des Elektrodenhalters (2) gegenüberliegenden zweiten Längsende (9) hin gelegenen Eintrittsöffnung (10) und wenigstens einer quer zu einer Längserstreckung des Elektrodenhalters (2) weisenden, von der Eintrittsöffnung (10) in Richtung der Längserstreckung gesehen zu dem ersten Längsende (6) hin verschoben gelegenen Austrittsöffnung (12).

2. Elektrodeneinheit (1) nach Anspruch 1, **gekennzeichnet durch** eine Mehrzahl von entlang eines Umfanges des Elektrodenhalters (2) verteilt angeordneten, quer zu der Längserstreckung weisenden Austrittsöffnungen (12).

3. Elektrodeneinheit (1) nach einem der vorhergehenden Ansprüche, **dadurch gekennzeichnet, dass** die Eintrittsöffnung (10) an einer an dem zweiten Längsende (9) ausgebildeten Stirnseite des Elektrodenhalters (2) angeordnet ist und dass der Gasführungskanal (8, 11) einen entlang der Längserstreckung verlaufenden von der Eingangsöffnung (10) ausgehenden, in Richtung des ersten Längsendes (6) geführten Längskanalabschnitt (8) und wenigstens einen quer zu dem Längskanalabschnitt (8) geführten, in der Austrittsöffnung (12) mündenden Querkanalabschnitt (11) aufweist.

4. Elektrodeneinheit (1) nach Anspruch 3, **dadurch gekennzeichnet, dass** der Längskanalabschnitt (8) entlang einer Mittellängsachse des Elektrodenhalters (2) verläuft.

5. Elektrodeneinheit (1) nach einem der vorhergehenden Ansprüche, **dadurch gekennzeichnet, dass** die Elektrode (3) mit einem hinteren, in dem Elektrodenhalter (2) fest verankerten Ende in einer Längsposition des Elektrodenhalters (2) endet, die in Richtung des zweiten Längsendes (9) des Elektrodenhalters (2) gesehen vor der Position / den Positionen der einen / mehreren Austrittsöffnung(en) (12) liegt.

6. Elektrodeneinheit (1) nach einem der vorhergehenden Ansprüche, **dadurch gekennzeichnet, dass** der Elektrodenhalter (2) einen Schaftabschnitt (4) und einen sich an den Schaftabschnitt (4) in Richtung des ersten Längsendes (6) anschließenden Wirkabschnitt (5) aufweist, wobei in dem Bereich, in dem der Wirkabschnitt (5) sich an den Schaftabschnitt (4) anschließt, der Wirkabschnitt (5) einen gegenüber dem Schaftabschnitt (4) vergrößerten Durchmesser aufweist.

7. Elektrodeneinheit (1) nach Anspruch 6, **dadurch gekennzeichnet, dass** die Austrittsöffnung(en) (12) in dem Schaftabschnitt (4) ausgebildet ist / sind.

8. Elektrodeneinheit (1) nach einem der Ansprüche 6 oder 7, **dadurch gekennzeichnet, dass** der Schaftabschnitt (4) eine Verbindungsstruktur (13) zum lösbaren Festlegen der Elektrodeneinheit (1) an einer in einem Schweißbrenner (18) vorgesehenen Anschlussstruktur (21) aufweist und dass in dem Wirkabschnitt (5) ein Werkzeugangriff (14) ausgebildet ist zum Ansetzen eines Werkzeugs für das Festlegen der Elektrodeneinheit (1) an der Anschlussstruktur (21).

9. Elektrodeneinheit (1) nach einem der Ansprüche 6 bis 8, **dadurch gekennzeichnet, dass** in dem Wirkabschnitt (5) eine umfangsseitige Außenfläche des Elektrodenhalters (2) mit einem sich in Richtung des ersten Längsendes (6) hin verjüngenden Durchmesser als Gasführungsfläche (16) ausgebildet ist.

10. Elektrodeneinheit (1) nach einem der vorhergehenden Ansprüche, **dadurch gekennzeichnet, dass** der Elektrodenhalter (2) im Bereich seines zweiten Längsendes (9) einen konisch sich zu dem zweiten Längsende (9) hin verjüngenden Sitzkonus (7) aufweist.

11. Elektrodeneinheit (1) nach Anspruch 10, **dadurch gekennzeichnet, dass** die Eintrittsöffnung (10) im Bereich des Sitzkonus (7) angeordnet ist und dass die Austrittsöffnung(en) (12) außerhalb des Sitzkonus (7) angeordnet ist / sind.

12. Elektrodeneinheit (1) nach einem der vorhergehenden Ansprüche, **dadurch gekennzeichnet, dass** die Elektrode (3) in dem Elektrodenhalter (2) stoffschlüssig festgelegt und/oder verpresst ist.

13. Elektrodeneinheit (1) nach einem der vorherstehenden Ansprüche, **dadurch gekennzeichnet, dass** der Elektrodenhalter (2) aus einem Metall mit hoher thermischer Leitfähigkeit, insbesondere aus Kupfer, besteht.

14. Elektrodeneinheit (1) nach einem der vorhergehenden Ansprüche, **dadurch gekennzeichnet, dass** die Elektrode (3) aus Wolfram oder einer Wolframlegierung besteht.

15. Schweißbrenner (18) für das Inertgasschweißen mittels einer nicht abschmelzenden Elektrode (3), **dadurch gekennzeichnet, dass** er eine Elektrodeneinheit (1) nach einem der vorhergehenden Ansprüche aufweist.

## Claims

1. An electrode unit (1) for inert gas welding by means of a non-melting electrode (3) with an electrode holder (2) and an electrode (3) held firmly and non-detachably in the electrode holder (2), having an electrode tip (17) at a front end and projecting with the front end having the electrode tip (17) at a first longitudinal end (6) of the electrode holder (2) beyond the electrode holder (2), **characterised in that in that** a gas guide channel (8, 11) is formed in the electrode holder (2) with an inlet opening (10) located towards a second longitudinal end (9) opposite the first longitudinal end (6) of the electrode holder (2) and at least one outlet opening (12) facing transversely to a longitudinal extent of the electrode holder (2) and located offset from the inlet opening (10) as seen in the direction of the longitudinal extent towards the first longitudinal end (6).

2. An electrode unit (1) according to claim 1, **characterised by** a plurality of outlet openings (12) distributed along a circumference of the electrode holder (2) and pointing transversely to the longitudinal extension.

3. An electrode unit (1) according to one of the preceding claims, **characterised in that** the inlet opening (10) is arranged at an end face of the electrode holder (2) formed at the second longitudinal end (9), and **in that** the gas guide channel (8, 11) has a longitudinal channel section (8) extending along the longitudinal extent, starting from the inlet opening (10) and guided in the direction of the first longitudinal end (6), and at least one transverse channel section (11) guided transversely to the longitudinal channel section (8) and opening into the outlet opening (12).

4. An electrode unit (1) according to claim 3, **characterised in that** the longitudinal channel section (8) runs along a central longitudinal axis of the electrode holder (2).

5. An electrode unit (1) according to one of the preceding claims, **characterised in that** the electrode (3) ends with a rear end firmly anchored in the electrode holder (2) in a longitudinal position of the electrode holder (2) which, viewed in the direction of the second longitudinal end (9) of the electrode holder (2), lies in front of the position(s) of the one or more exit opening(s) (12).

6. An electrode unit (1) according to one of the preceding claims, **characterised in that** the electrode holder (2) has a shaft section (4) and an active section (5) adjoining the shaft section (4) in the direction of the first longitudinal end (6), the active section (5) having an enlarged diameter compared to the shaft section (4) in the region in which the active section (5) adjoins the shaft section (4).

7. An electrode unit (1) according to claim 6, **characterised in that** the outlet opening(s) (12) is/are formed in the shaft section (4).

8. An electrode unit (1) according to any one of claims 6 or 7, **characterised in that** the shaft portion (4) has a connecting structure (13) for releasably securing the electrode unit (1) to a terminal structure (21) provided in a welding torch (18), and **in that** a tool engagement (14) is formed in the operative portion (5) for engaging a tool for securing the electrode unit (1) to the terminal structure (21).

9. An electrode unit (1) according to any one of claims 6 to 8, **characterised in that** a circumferential outer surface of the electrode holder (2) with a diameter tapering towards the first longitudinal end (6) is formed as a gas guide surface (16) in the active section (5).

10. An electrode unit (1) according to one of the preceding claims, **characterised in that** the electrode holder (2) has in the region of its second longitudinal end (9) a seat cone (7) tapering conically towards the second longitudinal end (9).

11. An electrode unit (1) according to claim 10, **characterised in that** the inlet opening (10) is arranged in the region of the seat cone (7) and that the outlet opening(s) (12) is/are arranged outside the seat cone (7).

12. An electrode unit (1) according to one of the preceding claims, **characterised in that** the electrode (3) is fixed and/or pressed in the electrode holder (2) by material bonding.

13. An electrode unit (1) according to one of the preceding claims, **characterised in that** the electrode holder (2) consists of a metal with high thermal conductivity, in particular copper.

14. An electrode unit (1) according to one of the preceding claims, **characterised in that** the electrode (3) consists of tungsten or a tungsten alloy.

15. A welding torch (18) for inert gas welding by means of a non-melting electrode (3), **characterised in that** it comprises an electrode unit (1) according to one of the preceding claims.

## Revendications

1. Unité d'électrode (1) pour le soudage sous gaz inerte au moyen d'une électrode non fusible (3) avec un porte-électrode (2) et une électrode (3) maintenue de manière fixe et inamovible dans le porte-électrode (2), qui présente une pointe d'électrode (17) à une extrémité frontale et qui dépasse avec l'extrémité frontale de la pointe d'électrode (17) à une première extrémité longitudinale (6) du porte-électrode (2) au-delà du porte-électrode (2), **caractérisée en ce qu'**un canal de guidage de gaz (8, 11) est formé dans le porte-électrode (2) avec une ouverture d'entrée (10) située vers une seconde extrémité longitudinale (9) opposée à la première extrémité longitudinale (6) du porte-électrode (2) et au moins une ouverture de sortie (12) orientée transversalement à une étendue longitudinale du porte-électrode (2) et située décalée de l'ouverture d'entrée (10) comme vu dans la direction de l'étendue longitudinale vers la première extrémité longitudinale (6).

2. Unité d'électrode (1) selon la revendication 1, **caractérisée par** une pluralité d'ouvertures de sortie (12) réparties le long d'une circonférence du support d'électrode (2) et pointant transversalement à l'extension longitudinale.

3. Unité d'électrode (1) selon l'une des revendications précédentes, **caractérisée en ce que** l'ouverture d'entrée (10) est disposée sur une face frontale du support d'électrode (2) formée sur la seconde extrémité longitudinale (9), et **en ce que** le canal de guidage de gaz (8, 11) présente un tronçon de canal longitudinal (8) s'étendant le long de l'extension longitudinale, partant de l'ouverture d'entrée (10) et guidé en direction de la première extrémité longitudinale (6), et au moins un tronçon de canal transversal (11) guidé transversalement au tronçon de canal longitudinal (8) et débouchant dans l'ouverture de sortie (12).

4. Unité d'électrode (1) selon la revendication 3, **caractérisée en ce que** la section de canal longitudinal (8) s'étend le long d'un axe longitudinal central du support d'électrode (2).

5. Unité d'électrode (1) selon l'une des revendications précédentes, **caractérisée en ce que** l'électrode (3) se termine par une extrémité arrière fermement ancrée dans le porte-électrode (2) dans une position longitudinale du porte-électrode (2) qui, vue en direction de la seconde extrémité longitudinale (9) du porte-électrode (2), se trouve devant la ou les positions de la ou des ouvertures de sortie (12).

6. Unité d'électrode (1) selon l'une des revendications précédentes, **caractérisée en ce que** le porte-électrode (2) présente un tronçon de tige (4) et un tronçon actif (5) se raccordant au tronçon de tige (4) en direction de la première extrémité longitudinale (6), le tronçon actif (5) présentant un diamètre agrandi par rapport au tronçon de tige (4) dans la zone dans laquelle le tronçon actif (5) se raccorde au tronçon de tige (4).

7. Unité d'électrode (1) selon la revendication 6, **caractérisée en ce que** l'ouverture ou les ouvertures de sortie (12) est/sont formée(s) dans la section de tige (4).

8. Unité d'électrode (1) selon l'une quelconque des revendications 6 ou 7, **caractérisée en ce que** la partie d'arbre (4) a une structure de connexion (13) pour fixer de manière amovible l'unité d'électrode (1) à une structure de borne (21) prévue dans un chalumeau (18), et **en ce qu'**un engagement d'outil (14) est formé dans la partie opérationnelle (5) pour engager un outil pour fixer l'unité d'électrode (1) à la structure de borne (21).

9. Unité d'électrode (1) selon l'une quelconque des revendications 6 à 8, **caractérisée en ce qu'**une surface extérieure circonférentielle du porte-électrode (2) avec un diamètre se rétrécissant vers la première extrémité longitudinale (6) est formée comme une surface de guidage de gaz (16) dans la section active (5).

10. Unité d'électrode (1) selon l'une des revendications précédentes, **caractérisée en ce que** le porte-électrode (2) présente dans la région de sa seconde extrémité longitudinale (9) un cône de siège (7) se rétrécissant de manière conique vers la seconde extrémité longitudinale (9).

11. Unité d'électrode (1) selon la revendication 10, **caractérisée en ce que** l'ouverture d'entrée (10) est disposée dans la région du cône de siège (7) et que la ou les ouvertures de sortie (12) sont disposées à l'extérieur du cône de siège (7).

12. Unité d'électrode (1) selon l'une des revendications précédentes, **caractérisée en ce que** l'électrode (3) est fixée et/ou pressée dans le porte-électrode (2) par liaison de matière.

13. Unité d'électrode (1) selon l'une des revendications précédentes, **caractérisée en ce que** le porte-électrode (2) est constitué d'un métal à haute conductivité thermique, notamment du cuivre.

14. Unité d'électrode (1) selon l'une des revendications précédentes, **caractérisée en ce que** l'électrode (3) est constituée de tungstène ou d'un alliage de tungstène.

15. Torche de soudage (18) pour le soudage sous gaz inerte au moyen d'une électrode non fusible (3), **caractérisée en ce qu'**elle comprend une unité d'électrode (1) selon l'une des revendications précédentes.
